# EUROPÄISCHE PATENTANMELDUNG

(11) **EP 1 304 852 A1**
(43) Veröffentlichungstag der Anmeldung: **23.04.2003**
(21) Anmeldenummer: 01123500.9
(22) Anmeldetag: 28.09.2001
(51) Int. Cl.: H04M 1/02, H04Q 7/00, H04B 1/38

(54) **Kommunikations-Endgerät**

(71) Anmelder: SIEMENS AKTIENGESELLSCHAFT, 80333 München (DE)
(72) Erfinder: Kohl, Erik, 89275 Elchingen (DE)

(57) **Zusammenfassung**

Die Erfindung betrifft ein Kommunikations-Endgerät umfassend:
- eine Sende-/Empfangselektronik zum Aussenden oder/und Empfangen von Mobilfunksignalen und
- ein die Sende-/Empfangselektronik zumindest teilweise kapselndes Gehäuse,
wobei das Gehäuse ein elektrosensibles Material umfaßt, welches seine optischen Eigenschaften unter Einwirkung elektromagnetischer Strahlung oder/und eines elektrischen Feldes oder/und einer angelegten Spannung ändert.

## Beschreibung

Die Erfindung betrifft ein Kommunikations-Endgerät, insbesondere Mobilfunk-Endgerät, umfassend eine Sende-/Empfangselektronik zum Aussenden oder/und Empfangen von Mobilfunksignalen und ein die Sende-/Empfangselektronik zumindest teilweise kapselndes Gehäuse.

Für die Entscheidung von Benutzern, ein bestimmtes Kommunikations-Endgerät, wie beispielsweise Mobilfunk-Endgeräte, zu erwerben, sind neben den technischen Eigenschaften der auf dem Markt verfügbaren Mobilfunk-Endgeräte auch optische bzw. gestalterische Eigenschaften maßgeblich. Aus diesem Grund sind verschiedene Hersteller dazu übergegangen, ihre Mobilfunk-Endgeräte mit unterschiedlichen Design-Varianten anzubieten, beispielsweise derart, daß verschiedene Gehäuseschalen für ein bestimmtes Mobilfunk-Endgerät angeboten werden, welche dann je nach Geschmack des Benutzers ausgetauscht werden können. Darüber hinaus ist für die Kaufentscheidung für die Benutzer zunehmend bedeutend, mit welcher Intensität das von ihm genutzte Kommunikations-Endgerät elektromagnetische Strahlung abgibt. Es ist zu beachten, dass je nach vorliegenden Mobilfunk-Netzbedingungen, das Mobilfunk-Endgerät Mobilfunksignale mit unterschiedlicher Sendeleistung und damit elektromagnetische Strahlung unterschiedlicher Intensität aussendet. Für die Anzeige der aktuellen Sendleistung bzw. der Intensität der aktuell ausgesendeten elektromagnetischen Strahlung eines Mobilfunk-Endgeräts wurden bislang jedoch noch kaum Vorkehrungen von den Herstellern getroffen.

Es ist daher eine Aufgabe der vorliegenden Erfindung, ein Kommunikations-Endgerät der eingangs bezeichneten Art bereitzustellen, welches bei interessantem optischem Erscheinungsbild dem Benutzer eine Möglichkeit bietet, sendeleistungsabhängige Betriebsparameter zu erkennen.

Diese Aufgabe wird durch ein Kommunikations-Endgerät, insbesondere ein Mobilfunk-Endgerät, gelöst, umfassend eine Sende-/Empfangselektronik zum Aussenden oder/und Empfangen von Mobilfunksignalen und ein die Sende-/Empfangselektronik teilweise kapselndes Gehäuse, wobei das Gehäuse ein elektrosensibles Material umfaßt, welches seine optischen Eigenschaften elektromagnetischer Strahlung oder/und eines elektrischen Feldes oder/und einer angelegten Spannung ändert.

Durch die Ausbildung des Gehäuses aus elektrosensiblem Material ist es möglich, dem jeweiligen Benutzer allein durch das optische Erscheinungsbild zu signalisieren, mit welcher Sendeleistung das Kommunikations-Endgerät gerade betrieben wird. Der Benutzer kann daher anhand des optischen Erscheinungsbildes seines Kommunikations-Endgeräts entscheiden, ob er dieses beispielsweise in kopfnaher Stellung betreiben will oder ob er es vorzieht, das Kommunikations-Endgerät an einem Ort zu betreiben, an welchem eine geringere Sendeleistung erforderlich ist. Dieser Zustand wird dem Benutzer durch ein anderes optisches Erscheinungsbild, beispielsweise durch eine Veränderung der Farbe oder der Transparenz (Lichtdurchlässigkeit) des Gehäuses signalisiert.

Grundsätzlich ist es möglich, das elektrosensible Material derart zu wählen, daß es in Abhängigkeit von der Intensität elektromagnetischer Strahlung sein optisches Erscheinungsbild ändert. Es ist gleichermaßen möglich, die Änderung der optischen Eigenschaften von der Intensität eines in unmittelbarer Nähe der Sende-/Empfangsantenne des Mobilfunk-Endgeräts anliegenden elektrischen Feldes abhängig zu machen sowie eine zur Sendeleistung proportionale Spannung an das Gehäuse anzulegen und über diese Spannung die optischen Eigenschaften zu verändern.

In einer Weiterbildung der Erfindung kann vorgesehen sein, daß das elektrosensible Material ein elektrosensibles Kunststoffmaterial ist. Die Wahl eines elektrosensiblen Kunststoffmaterials hat neben dem Vorteil der einfachen Verarbeitbarkeit den weiteren Vorteil einer kostengünstigen Herstellung des Gehäuses.

Wie vorstehend bereits angedeutet kann vorgesehen sein, daß das elektrosensible Material seine Farbe oder/und seine Lichtdurchlässigkeit unter Einwirkung der elektromagnetischen Strahlung oder/und des elektrischen Feldes oder/und der angelegten elektrischen Spannung ändert. So ist es möglich, daß beispielsweise das elektrosensible Material bei wachsender Intensität der elektromagnetischen Strahlung seine Farbe beispielsweise von grün zu rot wechselt, oder Farbschlieren zeigt oder eine intensivere, "leuchtendere" Farbe annimmt. Gleichermaßen ist es möglich, daß sich die Lichtdurchlässigkeit ändert, beispielsweise derart, daß bei zunehmender Intensität der elektromagnetischen Strahlung, des elektrischen Feldes oder der angelegten elektrischen Spannung, das elektrosensible Material zunehmend opaker wird.

Ferner kann wie vorstehend bereits angedeutet vorgesehen sein, daß das Ausmaß der Änderung der optischen Eigenschaften des elektrosensiblen Materials von der Intensität der elektromagnetischen Strahlung bzw. von der Feldstärke des elektrischen Feldes bzw. von dem Betrag der angelegten elektrischen Spannung abhängt. Hinsichtlich der Verarbeitung kann vorgesehen sein, daß das elektrosensible Material durch Spritzgießen verarbeitbar ist. Dadurch kann eine kostengünstige Fertigung hoher Stückzahlen erzielt werden.

Grundsätzlich ist es möglich, das gesamte Gehäuse aus dem elektrosensiblen Material, insbesondere Kunststoffmaterial, herzustellen. Es ist jedoch aus Kostengründen auch denkbar, das elektrosensible Material in ein weiteres, vorzugsweise transparentes, Material einzubetten. Dieses weitere Material kann beispielsweise kostengünstiger als das elektrosensible Material sein und somit die Herstellungskosten eines erfindungsgemäßen Kommunikations-Endgeräts weiter reduzieren. Als weiteres Material kann beispielsweise Polycarbonat, ABS oder dergleichen verwendet werden.

In diesem Zusammenhang ist es ferner möglich, daß das weitere Material eine hohe Stabilität, insbesondere eine hohe Festigkeit, Schlagfestigkeit usw., aufweist. Bettet man in einer von einem derartig stabilen Material gebildeten Kammer ein verhältnismäßig forminstabiles elektrosensibles Material ein, welches im Extremfall sogar im flüssigen Aggregatszustand vorliegen werden kann, so sind hinsichtlich der Wahl des elektrosensiblen Materials weitere Freiräume geschaffen.

In einer Ausführungsform kann vorgesehen sein, daß das elektrosensible Material von einer elektrosensiblen Folie gebildet ist. Die elektrosensible Folie kann wie vorstehend bereits angedeutet in das weitere Material eingebettet sein oder aber auch an diesem angebracht sein, beispielsweise durch Aufkleben oder dergleichen.

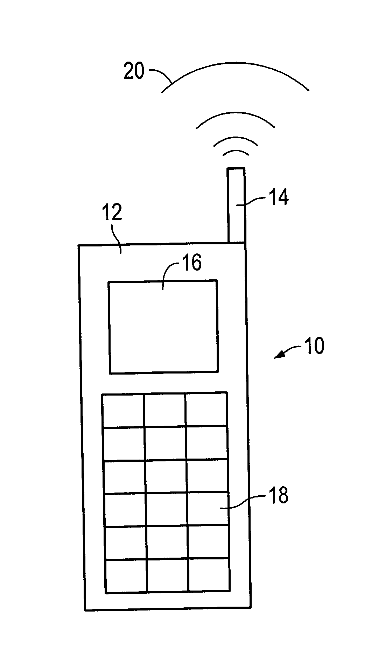

Im Folgenden wird ein Ausführungsbeispiel der Erfindung anhand der beiliegenden Figur 1 erläutert, welche ein erfindungsgemäßes Mobilfunk-Endgerät in der Vorderansicht darstellt.

In Figur 1 ist ein erfindungsgemäßes Mobilfunk-Endgerät allgemein mit 10 bezeichnet. Dieses umfaßt ein Gehäuse 12 aus elektrosensiblem Kunststoff, eine Antenne 14, ein Display 16 zur Anzeige von gesprächsrelevanten oder bedienungsrelevanten Funktionen sowie eine Tastatur 18 zur Steuerung des Gerätes.

Das Gehäuse 12 ist, wie vorstehend angedeutet, aus einem elektrosensiblen Kunststoffmaterial hergestellt, welches seine optischen Eigenschaften ändert, wenn von der Antenne elektromagnetische Strahlung 20 sich verändernder Intensität abgestrahlt wird. Dies geschieht beispielsweise dann, wenn eine mit dem Mobilfunk-Endgerät 10 kommunizierende Basisstation (nicht gezeigt) von dem Mobilfunk-Endgerät 10 - wie dies im GSM-Standard der Fall ist - eine Erhöhung der Sendeleistung anfordert, um eine zuverlässige stabile Verbindung zwischen Mobilfunk-Endgerät 10 und Basisstation zu gewährleisten.

Steigt die Intensität der elektromagnetischen Strahlung 20 im Bereich des Mobilfunk-Endgeräts 10, so ändert dieses beispielsweise seine Farbe oder die Intensität seiner Farbe, oder die Transparenz, d.h. Lichtdurchlässigkeit. Die Änderung einer oder aller dieser optischen Eigenschaften ist derart, daß der Benutzer eindeutig einen Hinweis darauf bekommt, ob die abgestrahlte elektromagnetische Strahlung in ihrer Intensität zunimmt oder abnimmt. So ist es möglich, daß sich das Gehäuse 12 des Kommunikations-Endgeräts von einem transparenten Zustand, welcher einen Betrieb mit geringer Sendeleistung repräsentiert, in einen lichtundurchlässigen (opaken) Zustand verändert, welcher eine hohe Intensität der elektromagnetischen Strahlung 20 signalisiert.

Mit dem erfindungsgemäßen mobilen Kommunikations-Endgerät 10 ist es also möglich, dem Benutzer anzuzeigen, mit welcher Sendeleistung das Kommunikations-Endgerät 10 gerade betrieben wird. Der Benutzer hat dadurch die Möglichkeit, abzuschätzen, welcher SAR-Wert (Specific Absorption Rate) gerade vorliegt und kann abhängig davon entscheiden, ob er das Kommunikations-Endgerät nutzen möchte oder nicht.

## Patentansprüche

1. Kommunikations-Endgerät, insbesondere Mobilfunk-Endgerät, umfassend:
- eine Sende-/Empfangselektronik zum Aussenden oder/und Empfangen von Mobilfunksignalen und
- ein die Sende-/Empfangselektronik zumindest teilweise kapselndes Gehäuse,
wobei das Gehäuse ein elektrosensibles Material umfaßt, welches seine optischen Eigenschaften unter Einwirkung elektromagnetischer Strahlung oder/und eines elektrischen Feldes oder/und einer angelegten Spannung ändert.

2. Kommunikations-Endgerät nach Anspruch 1,
**dadurch gekennzeichnet,**
**daß** das elektrosensible Material ein elektrosensibles Kunststoffmaterial ist.

3. Kommunikations-Endgerät nach Anspruch 1 oder 2,
**dadurch gekennzeichnet,**
**daß** das elektrosensible Material seine Farbe oder/und seine Lichtdurchlässigkeit unter Einwirkung der elektromagnetischen Strahlung oder/und des elektrischen Feldes oder/und der angelegten elektrischen Spannung ändert.

4. Kommunikations-Endgerät nach einem der vorangehenden Ansprüche,
**dadurch gekennzeichnet,**
**daß** das Ausmaß der Änderung der optischen Eigenschaften des elektrosensiblen Materials von der Intensität der elektromagnetischen Strahlung bzw. von der Feldstärke des elektrischen Feldes bzw. von dem Betrag der angelegten elektrischen Spannung abhängt.

5. Kommunikations-Endgerät nach einem der vorangehenden Ansprüche,
**dadurch gekennzeichnet,**
**daß** das elektrosensible Material durch Spritzgießen verarbeitbar ist.

6. Kommunikations-Endgerät nach einem der vorangehenden Ansprüche,
**dadurch gekennzeichnet,**
**daß** das elektrosensible Material in ein weiteres, vorzugsweise transparentes, Material eingebettet ist.

7. Kommunikations-Endgerät nach Anspruch 6,
**dadurch gekennzeichnet,**
**daß** das weitere Material eine hohe Stabilität aufweist.

8. Kommunikations-Endgerät nach Anspruch 6 oder 7,
**dadurch gekennzeichnet,**
**daß** das elektrosensible Material von einer elektrosensiblen Folie gebildet ist.
